# EUROPÄISCHE PATENTSCHRIFT

(11) **EP 3 894 282 B1**
(45) Veröffentlichungstag und Bekanntmachung des Hinweises auf die Patenterteilung: **30.09.2026**
(21) Anmeldenummer: 20839288.6
(22) Anmeldetag: 18.12.2020
(51) Int. Cl.: B60R 25/0215

(54) **VERRIEGELUNGSEINRICHTUNG, INSBESONDERE FÜR EIN KRAFTFAHRZEUG**
LOCKING DEVICE, IN PARTICULAR FOR A MOTOR VEHICLE
DISPOSITIF DE BLOCAGE, EN PARTICULIER POUR UN VÉHICULE À MOTEUR

(30) Priorität: 31.12.2019 DE 102019009036
(43) Veröffentlichungstag der Anmeldung: 20.10.2021
(73) Patentinhaber: Marquardt GmbH, 78604 Rietheim-Weilheim (DE)
(72) Erfinder: KAPLAN, Ali, 88512 Mengen (DE); KIZHUVEETUVALAPPIL, Midhun Parappur, Pidavanoor (IN)
(74) Vertreter: Staeger & Sperling Partnerschaftsgesellschaft mbB
(86) Internationale Anmeldenummer: PCT/EP2020/087069
(87) Internationale Veröffentlichungsnummer: WO 2021/136690

(56) Entgegenhaltungen:
- EP-A1- 2 452 857
- EP-A1- 3 227 147
- EP-B1- 2 452 857
- EP-B1- 2 455 621
- EP-B1- 3 227 147
- DE-A1- 10 000 857
- DE-A1- 102009 006 644
- DE-A1- 102014 016 895
- DE-A1- 102018 003 614
- ROBERT TIMMERBERG: "Neue ACE-Kleinstoßdämpfer bestehen gegen aggressive Fluide", 30 August 2018 (2018-08-30), XP002802429, Retrieved from the Internet <URL:https://www.fluid.de/hydraulik/neue-ace-kleinstossdaempfer-bestehen-gegen-aggressive-fluide-120.html> [retrieved on 20210318]

## Beschreibung

Die Erfindung geht aus von einer Verriegelungseinrichtung nach dem Oberbegriff des Patentanspruchs 1.

Derartige Verriegelungseinrichtungen dienen als Lenkungsverriegelung zum Verriegeln der Lenksäule in einem Kraftfahrzeug, genauer gesagt der Lenkwelle für das Lenkrad, um den Diebstahlschutz zu erhöhen. Sie werden beispielsweise bei Betätigung des Zündschlosses und/oder durch Ansteuerung von einem Steuergerät im Kraftfahrzeug ver- und/oder entriegelt. Anstelle der Lenkradsäule kann auch ein sonstiges funktionsrelevantes Bauteil des Kraftfahrzeugs, beispielsweise der Getriebeschalthebel o. dgl., verriegelbar sein.

In Kraftfahrzeugen kann anstelle eines mechanischen Zündschlosses ein elektronisches Zündschloss verwendet werden, das mittels eines elektronischen Schlüssels betätigbar ist. Zur näheren Ausgestaltung eines solchen elektronischen Zündschlosses wird auf die DE 44 34 587 A1 oder beispielsweise auch auf die WO 2016/087420 A1 verwiesen.

Weitere balgartige Elemente aufweisenden Vorrichtungen und Aspekte solcher Vorrichtungen sind zudem beispielsweise aus den Schriften DE 10 2009 006644 A1, EP 2 452 857 B1, EP 3 227 147 B1 und EP 2 455 621 B1 bekannt. Diese lehren jedoch jeweils keine Verriegelungseinrichtung, welche die Ausbildung von Feder und elastischem Balg al ein Verbundbauteil vorsieht.

Des Weiteren können in Kraftfahrzeugen auch Fahrberechtigungssysteme mit einer "KeylessGo"-Funktionalität zum Einsatz kommen, bei denen die Authentifikation des elektronischen Schlüssels durch eine Codeübertragung mittels elektromagnetischer Wellen selbsttätig erfolgt, wenn der Benutzer sich innerhalb des Kraftfahrzeugs befindet und beispielsweise eine Start/Stop-Taste im Armaturenbrett betätigt.

Bei einem elektronischen Zündschloss und/oder einem Fahrberechtigungssystem mit KeylessGo-Funktionalität kann in vorteilhafter Weise die Lenkungsverriegelung durch einen Antrieb, beispielsweise einen Elektromotor, angetrieben werden. Der Elektromotor wird nur dann zur Entriegelung angesteuert, wenn die codierten Daten des elektronischen Schlüssels richtig sind, d.h. wenn der zum Kraftfahrzeug zugehörige Schlüssel erkannt wird. Es handelt sich bei einer derartigen Lenkungsverriegelung um eine sogenannte elektrische und/oder elektronische Lenkungsverriegelung.

Eine solche Verriegelungseinrichtung besitzt ein zwischen einer ersten und einer zweiten Position bewegbares Sperrglied zur Verriegelung des funktionsrelevanten Bauteils. Das Sperrglied steht in der ersten Position in blockierenden Eingriff mit dem Bauteil und/oder ist in der ersten Position in blockierenden Eingriff mit dem Bauteil bringbar. In der zweiten Position steht das Sperrglied außer Eingriff mit dem Bauteil. Das Sperrglied ist mittels einer Feder in Richtung der ersten Position beaufschlagt. Es hat sich herausgestellt, dass durch die Einwirkung von äußeren Einflüssen, beispielsweise von Schmutz, die Funktion des Sperrgliedes beeinträchtigt sein kann.

Der Erfindung liegt die Aufgabe zugrunde, die Verriegelungseinrichtung derart weiterzuentwickeln, dass deren Funktionssicherheit verbessert ist.

Erfindungsgemäß wird daher eine Verriegelungseinrichtung gemäß der Merkmale des Anspruchs 1 vorgeschlagen.

Bei der erfindungsgemäßen Verriegelungseinrichtung ist die Feder in und/oder an einem elastischen Balg angeordnet. Dadurch ist das Sperrglied vor Verschmutzungen weitgehend geschützt, so dass in vorteilhafter Weise die Funktions- und/oder Betriebssicherheit für die Verriegelungseinrichtung gesteigert ist. Weitere Ausgestaltungen der Erfindung sind Gegenstand der Unteransprüche.

In weiterer Ausgestaltung kann ein ansteuerbares Antriebselement für die Bewegung des Sperrglieds zwischen den beiden Positionen vorgesehen sein. Zweckmäßigerweise kann es sich bei dem Antriebselement um einen Elektromotor handeln.

In kostengünstiger Art und Weise kann der elastische Balg aus Gummi bestehen.

Erfindungsgemäß sind die Feder und der elastische Balg als ein Verbundbauteil ausgebildet.

Die mit der Erfindung erzielten Vorteile bestehen insbesondere darin, dass das Sperrglied in kostengünstiger sowie kompakter Art und Weise vor negativen äußeren Einflüssen geschützt ist.

Ein Ausführungsbeispiel der Erfindung mit verschiedenen Weiterbildungen und Ausgestaltungen ist in den Zeichnungen dargestellt und wird im folgenden näher beschrieben. Es zeigen
- Fig. 1: ein Lenkrad eines Kraftfahrzeugs mit einer Verriegelungseinrichtung in schematischer Darstellung,
- Fig. 2: einen Detail-Ausschnitt aus der Verriegelungseinrichtung und
- Fig. 3: die nähere Ausgestaltung eines Einzelteils aus Fig. 2.

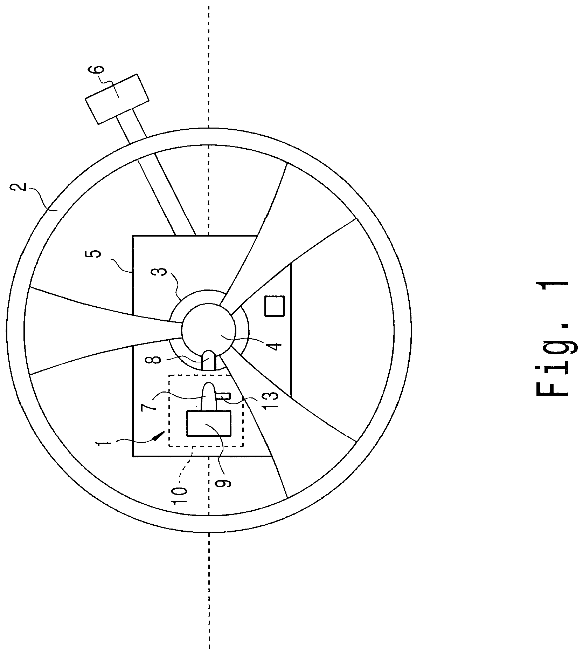

In Fig. 1 ist ein Lenkrad 2 mit einer Lenkradsäule 3 für ein Kraftfahrzeug zu sehen. In der Lenkradsäule 3 befindet sich die mit dem Lenkrad 2 in Verbindung stehende Lenkwelle 4. An der Lenkradsäule 3 ist in üblicher Weise eine Trägeranordnung 5 in der Art eines Lenkmoduls mit einem Lenkstockschalter 6 angeordnet. In der Nähe des Lenkrades 2 ist eine als elektrische Lenkungsverriegelung ausgebildete Verriegelungseinrichtung 1 an geeigneter Stelle an der Lenkradsäule 3 angeordnet, wobei die Verriegelungseinrichtung 1 schematisch sowie in teilweise aufgebrochener Darstellung gezeigt ist.

Die Verriegelungseinrichtung 1 besitzt ein zwischen zwei Positionen bewegbares Sperrglied 7. Das Sperrglied 7 ist entsprechend einer ersten Position in eine Einrastposition 8 an der Lenkwelle 4 in der Lenkradsäule 3 bringbar, so dass das Sperrglied 7 in blockierenden Eingriff mit der Lenkwelle 4 steht. Somit ist dann das Lenkrad 2 blockiert und kann daher nicht gedreht werden. Das Sperrglied 7 steht in einer zweiten Position außer verriegelnden bzw. blockierenden Eingriff mit der Einrastposition 8 an der Lenkwelle 4, womit das Lenkrad 2 zur Drehung freigegeben ist. In Fig. 1 ist lediglich eine Einrastposition 8 gezeigt, es können jedoch auch mehrere Einrastpositionen 8 in der Art eines Zahnkranzes an der Lenkwelle 4 in der Lenkradsäule 3 zur Blockierung der Drehbewegung der Lenkwelle 4 vorgesehen sein, damit der verriegelnde Eingriff des Sperrglieds 7 in unterschiedlichen Stellungen des Lenkrads 2 ermöglicht ist. Die Verriegelungseinrichtung 1 besitzt weiter ein ansteuerbares Antriebselement 9, und zwar insbesondere einen Elektromotor, für die Bewegung des Sperrglieds 7 zwischen den beiden Positionen. Des Weiteren ist ein Sicherungsmittel 13 für das Sperrglied 7 vorgesehen, wobei das Sicherungsmittel 13 in der Art einer Sicherungseinrichtung zum Sichern des Sperrglieds 7 in der zweiten Position gegen unbeabsichtigte Bewegung in die erste Position aufgrund einer Fehlfunktion wirkt. Schließlich ist für die Verriegelungseinrichtung 1 noch ein Gehäuse 10 vorgesehen.

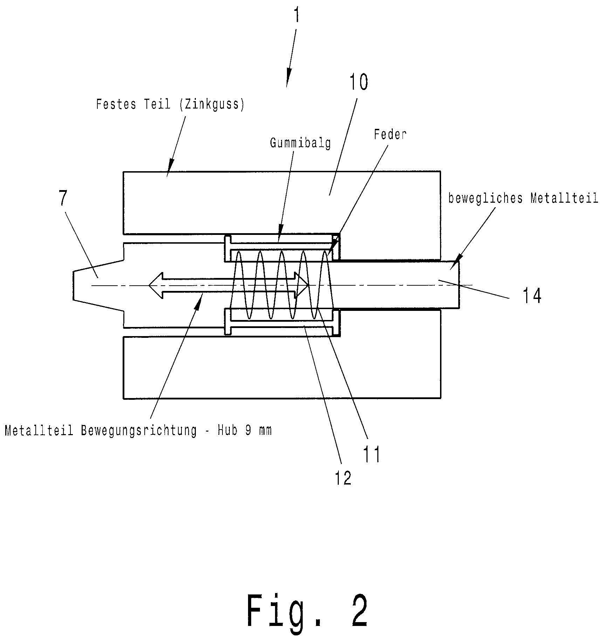

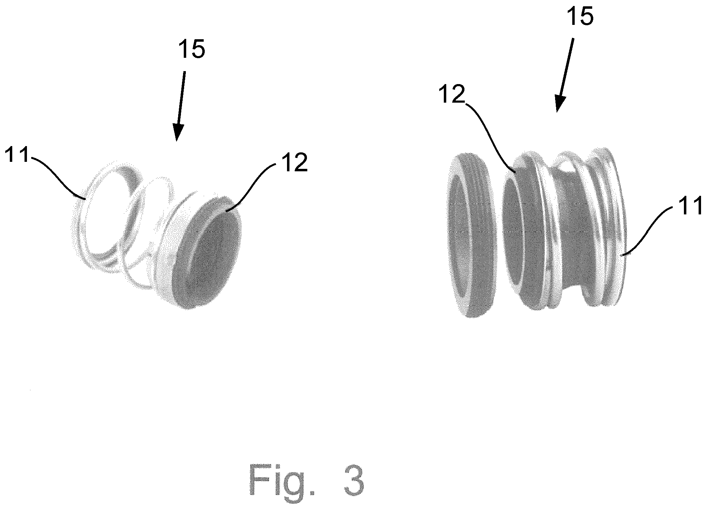

Wie weiter in Fig. 2 gezeigt ist, ist das Sperrglied 7 mittels einer Feder 11 in Richtung der ersten Position beaufschlagt, so dass das Sperrglied 7 mittels Federkraft in die Einrastposition 8 bringbar ist. Weiterhin ist die Feder 11 in und/oder an einem elastischen Balg 12 angeordnet. Der elastische Balg 12 schützt insbesondere einen Stößel 14, der wiederum ein Bestandteil des Sperrgliedes 7 ist. Der elastische Balg 12 besteht aus Gummi. Gemäß der Fig. 3 können die Feder 11 und der elastische Balg 12 als ein Verbundbauteil 15 ausgebildet sein.

Die Erfindung ist nicht auf das beschriebene und dargestellte Ausführungsbeispiel beschränkt. Sie umfasst vielmehr auch alle fachmännischen Weiterbildungen im Rahmen der durch die Patentansprüche definierten Erfindung. So kann eine derartige Verriegelungseinrichtung 1 nicht nur als Lenkradverriegelung an der Lenkradsäule sondern auch an einem sonstigen funktionsrelevanten Bauteil und/oder Betriebsaggregat des Kraftfahrzeugs Verwendung finden. Bei einem solchen Bauteil und/oder Betriebsaggregat kann es sich beispielsweise um den Getriebeschalthebel, um den Wählhebel für ein Automatikgetriebe, um den Anlasser o. dgl. handeln. Des Weiteren kann eine solche Verriegelungseinrichtung 1 auch an einem sonstigen Schloss, beispielsweise bei einem Türschloss für das Kraftfahrzeug, für eine Immobilie o. dgl., Verwendung finden.

### Bezugszeichen-Liste:

- 1:: Verriegelungseinrichtung / elektrische Lenkungsverriegelung
- 2:: Lenkrad
- 3:: Lenkradsäule
- 4:: Lenkwelle
- 5:: Trägeranordnung
- 6:: Lenkstockschalter
- 7:: Sperrglied
- 8:: Einrastposition
- 9:: Antriebselement
- 10:: Gehäuse (der Verriegelungseinrichtung)
- 11:: Feder
- 12:: (elastischer) Balg
- 13:: Sicherungsmittel
- 14:: Stößel
- 15:: Verbundbauteil

## Patentansprüche

1. Verriegelungseinrichtung,
insbesondere elektrische Lenkungsverriegelung für ein Kraftfahrzeug,
mit einem zwischen einer ersten und einer zweiten Position bewegbaren Sperrglied (7) zur Verriegelung eines funktionsrelevanten Bauteils,
wie der Lenkwelle (4) in der Lenkradsäule (3), des Getriebeschalthebels o. dgl.,
wobei das Sperrglied (7) in der ersten Position in blockierenden Eingriff mit dem Bauteil steht und/oder in blockierenden Eingriff mit dem Bauteil bringbar ist und in der zweiten Position außer Eingriff mit dem Bauteil steht, und
wobei das Sperrglied (7) mittels einer Feder (11) in Richtung der ersten Position beaufschlagt ist,
**dadurch gekennzeichnet, dass** die Feder (11) in und/oder an einem elastischen Balg (12) angeordnet ist und
wobei die Feder (11) und der elastische Balg (12) als ein Verbundbauteil (15) ausgebildet sind.

2. Verriegelungseinrichtung nach Anspruch 1, **dadurch gekennzeichnet, dass**
ein ansteuerbares Antriebselement (9), insbesondere ein Elektromotor, für die Bewegung des Sperrglieds (7) zwischen den beiden Positionen vorgesehen ist.

3. Verriegelungseinrichtung nach Anspruch 1 oder 2, **dadurch gekennzeichnet, dass**
der elastische Balg (12) aus Gummi besteht.

## Claims

1. Locking device,
in particular an electric steering lock for a motor vehicle,
with a blocking member (7) movable between a first and a second position for locking a functionally relevant component, such as the steering shaft (4) in the steering column (3), the gear shift lever or the like,
wherein the blocking member (7), in the first position, is in blocking engagement with the component and/or can be brought into blocking engagement with the component and, in the second position, is out of engagement with the component, and
wherein the blocking member (7) is biased by means of a spring (11) in the direction of the first position,
**characterized in that** the spring (11) is arranged in and/or on an elastic bellows (12) and
wherein the spring (11) and the elastic bellows (12) are formed as a composite component (15).

2. Locking device according to claim 1, **characterized in that**
a controllable drive element (9), in particular an electric motor, is provided for the movement of the blocking member (7) between the two positions.

3. Locking device according to claim 1 or 2, **characterized in that**
the elastic bellows (12) consists of rubber.

## Revendications

1. Dispositif de blocage, en particulier verrouillage de direction électrique pour un véhicule à moteur,
comprenant un organe d'arrêt (7) mobile entre une première et une seconde position pour le verrouillage d'un composant fonctionnel,
tel que l'arbre de direction (4) dans la colonne de direction (3), le levier de vitesses ou similaire,
dans lequel, dans la première position, l'organe d'arrêt (7) est en prise de blocage avec le composant et/ou peut être amené en prise de blocage avec le composant, et, dans la seconde position, est hors de prise avec le composant, et
dans lequel l'organe d'arrêt (7) est sollicité au moyen d'un ressort (11) en direction de la première position,
**caractérisé en ce que** le ressort (11) soit disposé dans et/ou sur un soufflet élastique (12), et
dans lequel le ressort (11) et le soufflet élastique (12) sont réalisés sous la forme d'un composant composite (15).

2. Dispositif de blocage selon la revendication 1, **caractérisé en ce qu'**un élément d'entraînement commandable (9), en particulier un moteur électrique, soit prévu pour le déplacement de l'organe d'arrêt (7) entre les deux positions.

3. Dispositif de blocage selon la revendication 1 ou 2, **caractérisé en ce que** le soufflet élastique (12) soit réalisé en caoutchouc.
